# EUROPÄISCHE PATENTSCHRIFT

(11) **EP 2 695 789 B1**
(45) Veröffentlichungstag und Bekanntmachung des Hinweises auf die Patenterteilung: **09.10.2019**
(21) Anmeldenummer: 13179411.7
(22) Anmeldetag: 06.08.2013
(51) Int. Cl.: B60W 30/18

(54) **Schaltung, Verfahren und Computerprogramm zur Steuerung eines Kriechmodus**
Circuit, method and computer program for controlling a creep modulus
Circuit, procédé et programme informatique destinés à la commande d'un mode rampant

(30) Priorität: 09.08.2012 DE 102012015872
(43) Veröffentlichungstag der Anmeldung: 12.02.2014
(73) Patentinhaber: Volkswagen Aktiengesellschaft, 38440 Wolfsburg (DE)
(72) Erfinder: Ruholl, Herbert, 38108 Braunschweig (DE); Mündemann, Sven-Oliver, 38104 Braunschweig (DE); Weiß, Norbert, 38173 Sickte (DE); Kaczor, Benjamin, 38527 Meine (DE); Ibenthal, Axel, 38116 Braunschweig (DE); Jelden, Hanno, 38518 Gifhorn (DE); Jauns-Seyfried, Stefanie, 38302 Wolfenbüttel (DE); Kruse, Georg, 38518 Gifhorn (DE)

(56) Entgegenhaltungen:
- EP-A1- 1 535 790
- EP-A2- 0 375 162
- WO-A1-2010/082896
- DE-A1-102009 055 832
- US-A- 4 969 103

## Beschreibung

Ausführungsbeispiele der vorliegenden Erfindung beziehen sich auf die Steuerung eines Kriechmodus eines Fahrzeugs, insbesondere auf die Aktivierung und Deaktivierung des Kriechmodus in einem Fahrzeug.

Die Antriebstechnik von Fahrzeugen befindet sich in einem stetigen Entwicklungsprozess. Beispielsweise gewinnen Hybridantriebe im Fahrzeugbau immer mehr an Bedeutung, da diese eine Verringerung des Energieverbrauchs und der Schadstoffemissionen versprechen. Die diesbezügliche Entwicklung sieht vor, dass sowohl elektrische Antriebsmaschinen als auch Verbrennungsmotoren zum Antrieb von Fahrzeugen verwendet werden. Die elektrischen Maschinen können dabei als alleiniger Antrieb oder Hilfsantrieb sowie als Startergenerator und als Generator zur Stromerzeugung benutzt werden.

Aus der konventionellen Technik sind Automatikgetriebe, die einen Wandler einsetzen, um ein Getriebe mit einem Verbrennungsmotor zu koppeln, bereits lange bekannt. Durch den Einsatz der Wandler ist jedoch eine totale Entkopplung von Antriebsmaschine und Getriebe nicht möglich. Somit verbleibt ein Restmoment, das auch im Stand, bei eingelegtem Gang, zu Schlupf und damit zu Verschleiß führt. Ein Vorteil der Tatsache, dass auch im Stillstand des Fahrzeuges ein Moment auf das Getriebe ausgeübt wird, liegt darin, dass ein sogenannter Kriechmodus oder eine Kriechfunktion ermöglicht wird. Hierbei kann das Fahrzeug mit langsamer Geschwindigkeit dadurch manövriert werden, dass die Bremse gelöst wird. Da durch den nicht idealen Wandler ständig Drehmomente von der Antriebsmaschine auf das Getriebe übertragen werden, bewegt sich das Fahrzeug daher fort, auch ohne dass ein Fahrpedal oder ein Gaspedal betätigt wird. Diese Funktion kann beispielsweise beim Einparken benutzt werden. Solche Manöver können daher unter alleiniger Zuhilfenahme des Bremspedals durchgeführt werden, ohne dass ein Gaspedal oder Fahrpedal beachtet werden muss.

Konventionelle Fahrzeuge mit Automatikgetrieben verfügen zumeist über eine Fahrstufe "D" (vgl. engl. "Drive"- "Fahren") oder "R" (vgl. engl. "Reverse"-"Rückwärts fahren") in der die Kriechfunktion aktiviert ist. Andere Fahrzeuge können auch, beispielsweise bauartbedingt, ohne Kriechfunktion ausgestattet sein.

In anderen Worten verfügen Fahrzeuge mit einem Automatikgetriebe in der Regel über eine solche sogenannte Kriechfunktion. Hierbei wird das Fahrzeug beim Lösen der Bremse in einer Fahrstufe aus dem Stillstand heraus ohne Betätigung des Fahrpedals auf eine Kriechgeschwindigkeit beschleunigt. Diese Fahrzeuge rollen auch nicht aus, sondern unterschreiten diese Geschwindigkeit nur unter Betätigung des Bremspedals. Dieses Verhalten ist bei Automatikgetrieben teilweise prinzipbedingt, da im Getriebe bzw. an der Fahrkupplung immer teilweise Kraftschluss besteht.

Dieses Kriechverhalten ist der Fahrer insbesondere im Rangierbetrieb gewohnt, wobei insbesondere auch beim Anfahren bergauf das Kriechverhalten dafür sorgen kann, dass das Fahrzeug nicht zurückrollt und somit ohne Benutzung der Handbremse angefahren werden kann. Das gleiche Prinzip bedingt jedoch, dass das Fahrzeug im Stand mit der Bremse gehalten werden muss, was z. B. im Stau störend ist. Außerdem führt dieses Verhalten dazu, dass das Fahrzeug nicht bis zum Stand ausrollt, sondern bewusst in den Stillstand gebremst werden muss. Weiterhin bedingt das Prinzip, dass vom Motor ein Moment gegen die Bremse gestellt wird und die Bremslichter angesteuert werden müssen. Dies führt zu einem Mehrverbrauch und zu einem erhöhten Verschleiß der beteiligten Komponenten.

Bei Fahrzeugen, bei denen im Stillstand eine Kraftübertragung an die Räder verhindert werden kann, wie beispielsweise bei Elektrofahrzeugen, ist eine Kriechfunktion nicht prinzipbedingt notwendig.

Die Druckschrift DE 10 2009 037 182 A1 offenbart ein Konzept zum Steuern bzw. Regeln des Kriechmoments eine Fahrzeugs mit Elektroantrieb abhängig von der Bremsstärke, um die beteiligten Komponenten, insbesondere im Stillstand des Fahrzeugs, zu schonen. Die Druckschrift US2002/0023789A1 offenbart ein Fahrzeug mit Hybridantrieb, bei dem die verschiedenen Antriebe in Abhängigkeit von Fahrtsituationen angesteuert werden. Ein Konzept wird offenbart, bei dem die Komponenten, insbesondere elektrische Maschinen im Generatorbetrieb, zum Bremsen verwendet werden. Dadurch kann Energie regenerativ zurückgewonnen werden und die Bremsen entsprechen geschont werden. Hierbei wird ebenfalls die Kriechfunktionalität des Fahrzeugs berücksichtigt.

Aus der EP 0 375 162 A2 und der DE 10 2009 055 832 A1 sind Verfahren zur Steuerung von Kupplungsvorrichtungen bekannt, bei denen das Kriechen beim Wechsel der Wählhebelposition zwischen Vorwärts- und Rückwärtsfahrt und umgekehrt immer deaktiviert wird.

Es besteht daher ein Bedarf daran, ein verbessertes Konzept zur Steuerung einer Kriechfunktion bereitzustellen.

Dies wird gemäß den anhängigen unabhängigen Ansprüchen erreicht.

Ausführungsbeispiele basieren auf der Erkenntnis, dass in Elektrofahrzeugen die Kriechfunktion, sofern vorhanden, von einem Steuergerät im E-Fahrzeug bereitgestellt wird. Insofern ist sie permanent vorhanden. Hier besteht eine Analogie zu mit Verbrennungskraftmaschinen und Automatikgetrieben. Es gibt Automatikgetriebe mit (z.B. Wandlerautomaten) und ohne (z.B. automatisierte Schaltgetriebe) Kriechfunktion. Diesen ist gemeinsam, dass die Kriechfunktion in den Fahrstufen "D" und "R" nicht schaltbar ist. Insofern können Ausführungsbeispiele auch auf der Erkenntnis beruhen, dass die Kriechfunktion schaltbar gemacht werden kann, um die Fahrcharakteristik eines Fahrzeugs an den Bedarf oder die Vorlieben eines Fahrers anpassen zu können.

Ausführungsbeispiele umfassen eine Schaltung zur Steuerung eines Kriechmodus in einem Fahrzeug, wobei der Kriechmodus durch Vorwählen einer Rückfahrtrichtung aktivierbar ist. Die Aktivierbarkeit durch Vorwählen einer Rückfahrtrichtung erlaubt eine intuitiv bedienbare Lösung zur Steuerung der Kriechfunktion. Ausführungsbeispiele können somit das bekannte Kriechverhalten mit der Möglichkeit eines ausrollenden Fahrzeugs, das nicht mit der Bremse im Stillstand gehalten werden muss, kombinieren. In Ausführungsbeispielen kann somit gegenüber permanent kriechenden Fahrzeugen der Verbrauch reduziert werden.

Die Schaltung ist ausgebildet, um das Wählhebelsignal von einem Wählhebel des Fahrzeugs zu empfangen und ein Fortbewegungssignal für das Fahrzeug bereit zu stellen. In anderen Worten, erhält die Schaltung als Eingang Signale, die eine Stellung des Wählhebels wiedergeben. Es muss nicht unbedingt um einen Wählhebel handeln, sondern es ist klar das dieser Ausdruck auch ohne weiteres ein Wähltaster, ein Wählknopf oder andere Wählvorrichtung umfasst. Die Schaltung kann darüber hinaus ein Signal ausgeben, das den Kriechmodus aktiviert bzw. auch deaktivieren kann. Das Fortbewegungssignal kann in einfachen Fällen ein binäres Signal sein, das eine Ein-/Aus-Information über den Kriechmodus enthält. In anderen Worten kann das Fortbewegungssignal in einfachen Ausführungsbeispielen einem logischen Signal entsprechen, das den Kriechmodus aktiviert oder deaktiviert. In Ausführungsbeispielen kann die Schaltung beispielsweise in einem Chip oder in einem anderen Gerät, z. B. in einem Steuergerät, integriert sein. Entsprechend können Eingänge und Ausgänge für die oben beschriebenen Signale vorgesehen sein. In Ausführungsbeispielen kann die Schaltung zur Kommunikation mit den beteiligten Komponenten auch an ein Bussystem angeschlossen sein, sodass gleiche Eingänge zum Empfang von Signalen und zum Bereitstellen von Signalen verwendet werden können.

In Ausführungsbeispielen kann das Fortbewegungssignal den Kriechmodus signalisieren, wobei sich das Fahrzeug in dem Kriechmodus aus dem Stand fortbewegt, ohne dass das Fahrpedal betätigt wird und die Fortbewegung im Kriechmodus des Fahrzeugs über das Bremspedal kontrollierbar ist. Insofern kann die Schaltung dafür sorgen, dass der Kriechmodus mit seinen Vorteilen aktiviert werden kann, und somit einem Nutzer des Fahrzeugs ein einfaches Rangieren ermöglicht wird. Beispielsweise in einem Stau kann somit ermöglicht werden, dass der Kriechmodus aktiviert wird, und ein "Stop and Go"-Manöver (engl. für wiederholtes Anhalten und Anfahren mit geringen Geschwindigkeiten) alleinig durch Betätigen der Bremse durchgeführt werden kann. In ähnlicher Weise kann der Kriechmodus deaktiviert werden, um somit im Stillstand des Fahrzeugs, selbiges nicht mit der Bremse halten zu müssen. Insofern können im Stillstand Kraftstoff und Verschleiß eingespart werden. Ausführungsbeispiele können somit den Vorteil bieten, dass manche Vorteile des Kriechmodus genutzt, dieser jedoch auch deaktiviert werden kann, sodass manche Nachteile nicht in Kauf genommen werden müssen.

In Ausführungsbeispielen kann das Fahrzeug bei deaktiviertem Kriechmodus ausrollen, d.h. es kann sich nach außen verhalten, als ob das Getriebe in einer Neutralstellung wäre. Dieser Zustand des Ausrollens kann mit dem Zustand verglichen werden, bei dem das Getriebe nicht mehr mit dem Antrieb gekoppelt ist. Dies führt eben wie oben beschrieben auch dazu, dass das Fahrzeug, wenn es einmal zum Stillstand gekommen ist, zumindest in der Ebene nicht mit der Bremse gehalten werden muss. In anderen Worten kann das Fahrzeug bei deaktiviertem Kriechmodus im Stand von seinem Antrieb getrennt sein. Beispielsweise kann sich das Fahrzeug in einem ausgekoppelten Zustand befinden, wenn sich zwischen Getriebe und Antriebsmaschine eine Kupplung befindet. Bei einem hybriden Antrieb kann der elektrische Antrieb so geschaltet sein, dass auch dieser den Antrieb des Fahrzeugs nicht beeinflusst. In anderen Worten kann der elektrische Antrieb bei ausgeschaltetem Kriechmodus weder motorisch noch generatorisch tätig sein. Wie bereits oben erwähnt, können in Fahrzeugen, insbesondere zur Ankopplung des Antriebs und des Getriebes, Nass- und Trockenkupplungen eingesetzt werden. Insofern wird hier davon ausgegangen, dass eine solche Kupplung steuerbar ist, sodass bei deaktiviertem Kriechmodus die entsprechende Trennung oder Entkopplung vorgenommen werden kann.

In Ausführungsbeispielen kann die Schaltung ferner ausgebildet sein, um den Kriechmodus nach einem Start des Fahrzeugs zu deaktivieren. Unter dem Start des Fahrzeugs kann beispielsweise ein Anlassvorgang einer Verbrennungsmaschine verstanden werden. Bei Elektrofahrzeugen kann der Start des Fahrzeugs auch mit einem erstmaligen Anfahren nach einer längeren Pause verstanden werden. Insofern kann der Kriechmodus auch deaktiviert werden, wenn das Fahrzeug eingeschaltet wird, nachdem es zuvor ausgeschaltet war. Dies hat den Vorteil, dass nach dem Startvorgang keine Kopplung zwischen Antrieb und Getriebe vorhanden ist, sodass das Fahrzeug nicht mit der Bremse gehalten werden muss, weil es sich sonst von selbst fortbewegen würde. Zur Detektion des Starts des Fahrzeugs kann die Schaltung beispielsweise ein entsprechendes Eingangssignal oder ein Startsignal des Fahrzeugs auswerten. In Ausführungsbeispielen kann beispielsweise eine Versorgungsspannung detektiert werden, die nach Einschalten des Fahrzeugs an die Schaltung angebracht oder angelegt wird. Generell sind gerade im Bereich von Kraftfahrzeugen vielerlei Signale denkbar, die herangezogen werden können, um festzustellen, dass das Fahrzeug gerade von einem unbenutzten in einen benutzten Zustand übergeht, beispielsweise die Spannung einer Lichtmaschine oder die Versorgungsspannung allgemein.

Erfindungsgemäß wird der Kriechmodus durch Vorwählen einer Rückfahrtrichtung aktiviert, da dann ein Rangiervorgang wahrscheinlich ist. Dies bietet so den Vorteil, dass der Kriechmodus schnell aktivierbar und die Bedienung intuitiv ist. Darüber hinaus ist kein weiterer Schalter notwendig, um den Kriechmodus zu aktivieren, bzw. zu deaktivieren. Der Kriechmodus wird in Abhängigkeit der Wählhebelposition, z. B. bei Einlegen eine Rückwärtsganges, automatisch mitaktiviert. Durch die Detektion der Wählhebelposition können Situationen detektiert werden, in denen eine Rangierwahrscheinlichkeit groß ist, wobei der Kriechmodus dann in einer für den Benutzer bequemen Form aktiviert wird.

In weiteren Ausführungsbeispielen kann der Kriechmodus durch Absenken des Bremspedals über eine vorgegebene Schwelle hinaus und/oder ein Anheben des Fahrpedals deaktivierbar sein. In anderen Worten, kann durch ein starkes Drücken des Bremspedals oder aber ein Anheben des Fahrpedals oder Gaspedals der Kriechmodus deaktiviert werden. Beispielsweise kann dazu der Bremsdruck, der Pedalweg oder eine Bremskraft ausgewertet oder herangezogen werden. Die jeweilige Bremspedalschwelle kann dann an die Detektionsgröße angepasst werden, d.h. eine Druckschwelle für den Bremsdruck, eine Pedalwegschwelle für den Pedalweg oder eine Kraftschwelle für die Bremskraft. Dies bietet ebenfalls den Vorteil einer bequemen und intuitiven Bedienbarkeit. In Ausführungsbeispielen kann die vorgegebene Schwelle derart gewählt sein, dass ein Bremsdruck, ein Pedalweg oder eine Bremskraft des Bremspedals über einen Rangierbereich des Bremspedals hinausgeht.

In anderen Worten weist das Bremspedal einen gewissen Bremsdruck, Pedalweg oder eine Bremskraft zum Rangieren auf. Im Rangierbetrieb, d.h. im Kriechmodus, wenn lediglich geringe Geschwindigkeiten vorliegen, kann das Fahrzeug mit relativ kleinen Pedalwegen, Bremsdrücken oder Bremskräften gebremst und zum Stillstand gebracht werden. Das Bremsen zum Stillstand im Kriechmodus erfordert einen relativ geringen Bremsdruck, Pedalweg oder eine relativ geringe Bremskraft im Vergleich zu denjenigen, die beispielsweise bei einer Vollbremsung aus schneller Fahrt notwendig wären. Insofern existiert im Kriechmodus ein gewisser Bereich des Bremspedals (Bremsdruck, Pedalweg oder Bremskraft), der für Rangiermanöver zu erwarten ist. Wenn nun außerhalb dieses Bereichs eine Schwelle definiert wird, so kann diese in Ausführungsbeispielen dazu verwendet werden, den Kriechmodus zu deaktivieren. Beispielsweise in einem "Stop and Go"-Szenario in einem Stau kann zunächst der Kriechmodus dazu benutzt werden, den "Stop and Go"-Bewegungen zu folgen. Kommt es doch zu einem Stillstand, so kann durch eine kurze, stärkere Pedalbewegung (höherer Druck/ höhere Kraft) des Bremspedals, der Kriechmodus deaktiviert werden, und so das Fahrzeug zum Stillstand gebracht werden, ohne dass es bei Lösen der Bremse wieder Fahrt aufnehmen wird.

In Ausführungsbeispielen kann der Kriechmodus auch durch Überschreiten einer vordefinierten Mindestgeschwindigkeit deaktiviert werden. In anderen Worten kann der Kriechmodus, nachdem er einmal aktiviert wurde, dann wieder deaktiviert oder ausgeschaltet werden, wenn das Fahrzeug eine gewisse Mindestgeschwindigkeit erreicht hat. Dies bietet den Vorteil, dass wenn das Fahrzeug danach wieder gestoppt wird, nicht automatisch der Kriechmodus aktiviert ist. Danach kann ein Fahrzeug, das nach dem Anfahren wieder zum Stillstand kommt, wie beispielsweise im Stadtverkehr zwischen Ampeln, zum Stillstand gebracht werden, ohne dass es mit Bremse weiter gehalten werden muss. Wenn der Kriechmodus einmal aktiviert ist, kann dieser so ausgelegt sein, dass ein Antriebsmoment für das Fahrzeug erzeugt wird, solange eine vorgegebene Sollgeschwindigkeit nicht erreicht ist. In anderen Worten kann im Kriechmodus das Fahrzeug angetrieben werden, bis eine gewisse Sollgeschwindigkeit, beispielsweise 2 km/h, 3 km/h, 5 km/h, 7 km/h, 10 km/h, usw. erreicht ist. Anders ausgedrückt kann die Schaltung ausgebildet sein, um bei aktiviertem Kriechmodus ein Fortbewegungssignal derart bereitzustellen, dass ein Antriebsmoment für das Fahrzeug erzeugt wird, solange eine vorgegebene Sollgeschwindigkeit nicht erreicht ist. Bei Überschreiten der Sollgeschwindigkeit wird der Kriechmodus dann deaktiviert.

In einer vorteilhaften Ausführung kann die Mindestgeschwindigkeit eine Vorwärtsgeschwindigkeit sein und um die Deaktivierung des Kriechmodus zu erreichen, muss die Mindestgeschwindigkeit bei gewählter Vorwärtsfahrt erreicht werden. In anderen Worten muss der Wählhebel in der Position für die Vorwärtsfahrt sein und das Fahrzeug muss vorwärts fahren. Dadurch sind ungewollte Deaktivierungen des Kriechmodus verhindern.

In weiteren Ausführungsbeispielen kann die Schaltung ferner einen Schalter zur Aktivierung oder Deaktivierung der Kriechfunktion aufweisen. In Ausführungsbeispielen kann der Schalter in Hardware oder in Software realisiert sein. In anderen Worten kann der Schalter in einem Steuergerät realisiert sein, dass per Hard- und/oder Software die Schaltung und damit den Kriechmodus aktivieren und/oder deaktivieren kann. Das Vorsehen eines Schalters kann den Vorteil bieten, dass die Kriechfunktion an die Vorlieben oder den Bedarf eines Benutzers oder Fahrers angepasst werden kann. Das Vorsehen als Softwareimplementierung, kann wiederum Kostenvorteile bringen und eine Integration in bestehende Systeme, wie z.B. Kombiinstrumente, ermöglichen.

Ausführungsbeispiele schaffen ferner ein Fahrzeug mit einer Schaltung gemäß einem der vorrangehenden Ansprüche. Beispielsweise kann diese Schaltung in einem Steuergerät des Fahrzeugs implementiert sein. Das Fortbewegungssignal kann dann einen Antrieb entsprechend steuern, bzw. zwischen aktiviertem und deaktiviertem Kriechmodus hin- und herschalten. In Ausführungsbeispielen kann das Fahrzeug zumindest eine elektrische Antriebskomponente, eine gesteuerte Kupplung oder ein Automatikgetriebe aufweisen. Allgemein weist das Fahrzeug in Ausführungsbeispielen einen Antrieb auf, der ein entsprechendes Ein- und Ausschalten des Kriechmodus erlaubt. Die elektrische Antriebskomponente kann im Wesentlichen aus einem Elektromotor bestehen, der in weiteren Ausführungsbeispielen auch als Generator eingesetzt werden kann. Wie bereits oben beschrieben kann sich zwischen dem Getriebe und dem Antrieb eine gesteuerte Kupplung befinden, die eine Entkopplung der beiden Komponenten vornehmen kann. Darüber hinaus kann das Fahrzeug ein Automatikgetriebe aufweisen, das für eine entsprechende Trennung, d.h. das Deaktivieren des Kriechmodus ausgelegt ist.

Ausführungsbeispiele schaffen darüber hinaus ein Verfahren zur Steuerung eines Kriechmodus in einem Fahrzeug, mit Aktivieren des Kriechmodus durch Vorwählen einer Rückfahrtrichtung . Ausführungsbeispiele schaffen ferner ein Programm mit einem Programmcode zum Durchführen eines der oben beschriebenen Verfahren, wenn der Programmcode auf einem Computer, einem Prozessor oder einer programmierbaren Hardwarekomponente ausgeführt wird. Nachfolgend werden unter Bezugnahme auf die beigefügten Figuren Ausführungsbeispiele näher beschrieben und erläutert.
Fig. 1 zeigt ein Ausführungsbeispiel einer Schaltung zur Steuerung eines Kriechmodus;
Fig. 2 zeigt ein weiteres Ausführungsbeispiel einer Schaltung zur Steuerung eines Kriechmodus;
Fig. 3 zeigt beispielhafte Signalverläufe aus einem Ausführungsbeispiel;
Fig. 4 zeigt weitere beispielhafte Signalverläufe aus einem Ausführungsbeispiel; und
Fig. 5 zeigt ein Blockschaltbild eines Flussdiagramms eines Ausführungsbeispiels eines Verfahrens zur Steuerung eines Kriechmodus.

Bei der nachfolgenden Beschreibung der beigefügten Figuren, die Ausführungsbeispiele zeigen, bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

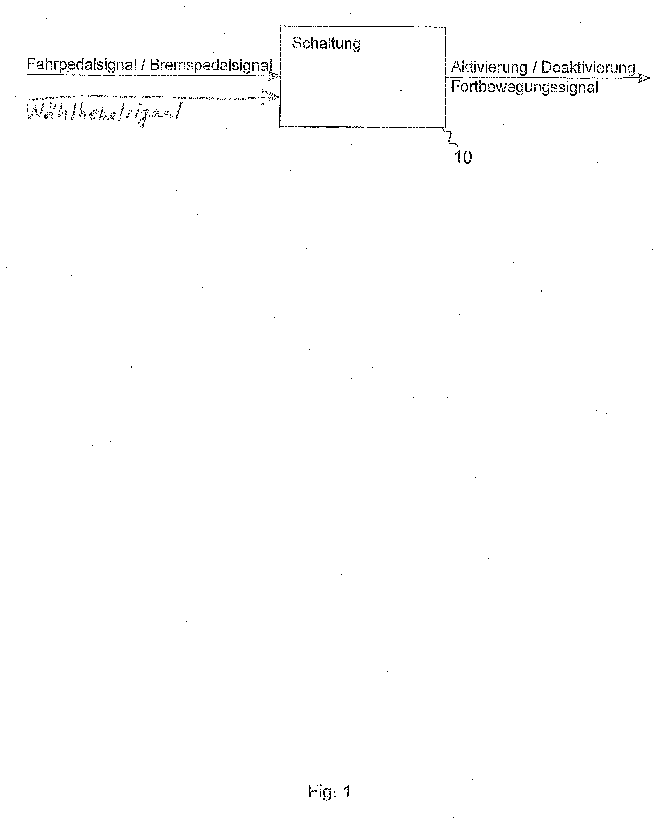

Fig. 1 zeigt ein Ausführungsbeispiel einer Schaltung 10 zur Steuerung eines Kriechmodus in einem Fahrzeug. Der Kriechmodus ist durch Vorwählen einer Rückfahrtrichtung aktivierbar. Die Schaltung 10 ist ausgebildet, um das Wählhebelsignal vom Wählhebel zu empfangen und ein Fortbewegungssignal für das Fahrzeug bereitzustellen. Weiterhin ist die Schaltung 10 so ausgebildet, um vorzugsweise und auch das Bremspedalsignal von einem Bremspedal des Fahrzeugs bzw. das Fahrpedalsignal von einem Fahrpedal des Fahrzeugs zu empfangen. Dabei signalisiert das Fortbewegungssignal den Kriechmodus, d.h. es signalisiert, ob dieser aktiviert oder deaktiviert ist. In dem Kriechmodus bewegt sich das Fahrzeug aus dem Stand fort, ohne dass das Fahrpedal betätigt wird. Die Fortbewegung im Kriechmodus des Fahrzeugs kann über das Bremspedal kontrolliert werden. Bei Fahrzeugen, bei denen im Stillstand eine Kraftübertragung an die Räder sicher verhindert werden kann, wie beispielsweise bei Elektrofahrzeugen, kann so auf eine generelle Kriechfunktion verzichtet werden. Die Kriechfunktion oder der Kriechmodus kann aber aktiviert werden, sobald der Fahrer sie benötigt, beispielsweise im Rangierbetrieb. Ebenso kann der Kriechmodus wieder deaktiviert werden, sobald der Fahrer ihn nicht mehr benötigt, beispielsweise nach Ende des Rangierens.

Bei deaktiviertem Kriechmodus rollt das Fahrzeug aus, es braucht daher nicht mit der Bremse gehalten zu werden. Es wird kein Moment vom Antrieb auf die Räder übertragen. In anderen Worten ist das Fahrzeug bei deaktiviertem Kriechmodus im Stand von seinem Antrieb getrennt. Dies kann beispielsweise durch ein Auskuppeln geschehen, bzw. sind elektrische, motorische oder generatorische Komponenten in diesem Betriebszustand ausgeschaltet, sodass diese keine Wirkung auf die Räder des Fahrzeugs haben.

Darüber hinaus ist die Schaltung 10 im vorliegenden Ausführungsbeispiel ausgebildet, um den Kriechmodus nach einem Start des Fahrzeugs zu deaktivieren. In anderen Worten wird das Fahrzeug im Stand nach einem Erststart nicht kriechen. Zum Aktivieren des Kriechens kann der Fahrer jedoch seinen Kriechwunsch äußern. Der Kriechwunsch ist dadurch geäußert werden, dass der Fahrer eine Rückfahrtrichtung vorwählt, beispielsweise durch Einlegen eines Rückwärtsganges. Der Kriechmodus ist somit schnell und einfach bedienbar, ohne dass zusätzliche Schalter notwendig wären.

Die Kriechfunktion bleibt so lange aktiviert, bis eine Bedingung zum Deaktivieren erkannt wird. Mögliche Bedingungen zum Deaktivieren sind beispielsweise ein Absenken des Bremspedals über eine vorgegebene Schwelle hinaus und/oder ein Anheben des Fahrpedals. In anderen Worten kann das Deaktivieren des Kriechmodus in einer entgegengesetzten Aktion der Aktion geschehen, die den Kriechmodus aktiviert. Wie bereits oben beschrieben, kann die vorgegebene Schwelle derart gewählt werden, dass ein Pedalweg des Bremspedals, ein Bremsdruck oder eine Bremskraft über einen Rangierbereich hinausgeht. In anderen Worten, wird beim leichten Betätigen des Bremssignals der Kriechmodus noch nicht ausgeschaltet. Dieses leichte Betätigen umfasst einen Pedalweg des Bremspedals, der ein Rangieren und insbesondere ein Stoppen des Fahrzeugs erlaubt. Erst wenn das Bremspedal stärker betätigt wird, d.h. stärker als es für ein reines Rangieren notwendig wäre, wird der Kriechmodus deaktiviert. Ferner kann der Kriechmodus durch Überschreiten einer vordefinierten Mindestgeschwindigkeit deaktiviert werden.

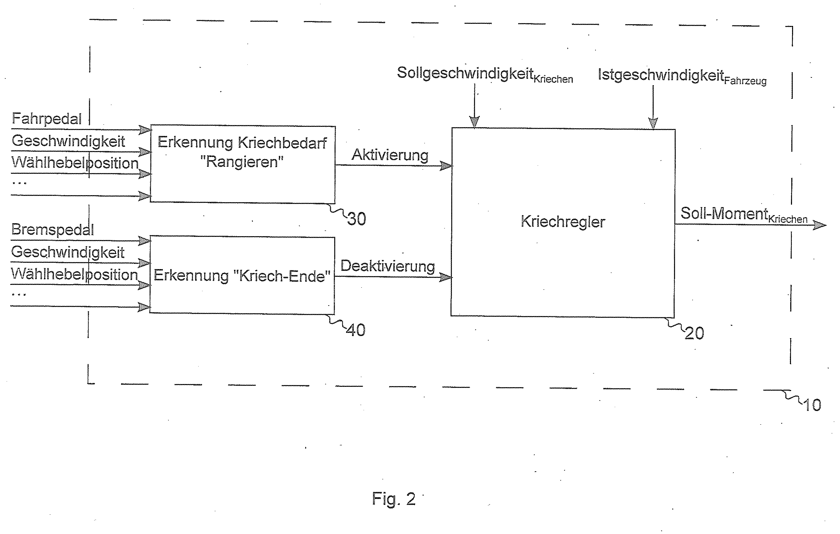

Die Fig. 2 illustriert ein weiteres Ausführungsbeispiel einer Schaltung 10 zur Steuerung eines Kriechmodus. In dem Ausführungsbeispiel der Fig. 2 umfasst die Schaltung 10 ferner einen Kriechregler 20 sowie 2 Erkennungsmodule 30 und 40. Das Erkennungsmodul 30 ist darauf ausgelegt, einen Kriechbedarf zu erkennen, und den Kriechmodus zu aktivieren. Das zweite Modul 40 ist auf die Erkennung eines Kriechendes ausgelegt und sorgt somit für die Deaktivierung des Kriechmodus. Eingangskomponenten für das Kriechbedarfserkennungsmodul 30 sind ein Fahrpedalsignal, das beispielsweise die Stellung des Fahrpedals repräsentiert. Darüber hinaus kann die Geschwindigkeit des Fahrzeugs als Eingangswert berücksichtigt werden. Als 3. Eingangswert kann eine Wählhebelposition berücksichtigt werden, insbesondere die Fahrtrichtung, die mit der Wählhebelposition einhergeht. Das Erkennungsmodul 40 für das Kriechbedarfsende kann als Eingangssignal ein Bremspedalsignal erhalten, das beispielsweise die Position oder den Stellgrad des Bremspedals wiedergibt. Darüber hinaus kann die Geschwindigkeit des Fahrzeugs berücksichtigt werden. Wie bereits für das Erkennungsmodul 30 beschrieben, kann auch hier ein Signal berücksichtigt werden, das die Wählhebelposition wiedergibt.

Wie die Fig. 2 andeutet können darüber hinaus noch weitere Signale berücksichtigt werden. Die beiden Module 30 und 40 liefern demnach Aktivierungs- bzw. Deaktivierungssignale für den Kriechmodus, die im vorliegenden Ausführungsbeispiel einem Kriechregler 20 zugeführt werden. Neben diesen Eingangsgrößen oder Eingangssignalen werden dem Kriechregler 20 darüber hinaus eine Sollgeschwindigkeit für den Kriechmodus und eine Istgeschwindkeit des Fahrzeugs zugeführt. Aus diesen Komponenten kann der Kriechregler 20 nun ein Sollmoment für den Kriechmodus ermitteln, sofern dieser aktiviert ist. Bei aktiviertem Kriechmodus, wird der Kriechregler 20 aus der Differenz von Soll- und Istgeschwindigkeit eine Regelabweichung ermitteln, die er nun über das Sollmoment versucht auszuregeln. Wie aus der konventionellen Technik bekannt, ist an dieser Stelle der Einsatz verschiedener Regler, wie z. B. des Proportional-Integralreglers (PI), des pi-Differentialreglers (PID), eines P-Reglers, eines I-Reglers, eines D-Reglers, usw., denkbar. In diesem Ausführungsbeispiel liefert der Kriechregler 20 ein Fortbewegungssignal, das dem Sollmoment für den Antrieb entspricht. In anderen Worten gibt der Kriechregler 20 bei aktiviertem Kriechmodus ein Fortbewegungssignal aus, das ein Antriebsmoment für das Fahrzeug derart steuert oder regelt, bis die vorgegebene Sollgeschwindigkeit erreicht ist, sofern das Fahrzeug nicht gebremst wird. In anderen Worten ist die Schaltung 10 insgesamt ausgebildet, um bei aktiviertem Kriechmodus ein Fortbewegungssignal derart bereitzustellen, dass ein Antriebsmoment für das Fahrzeug wird erzeugt wird, solange eine vorgegebene Sollgeschwindigkeit nicht erreicht ist.

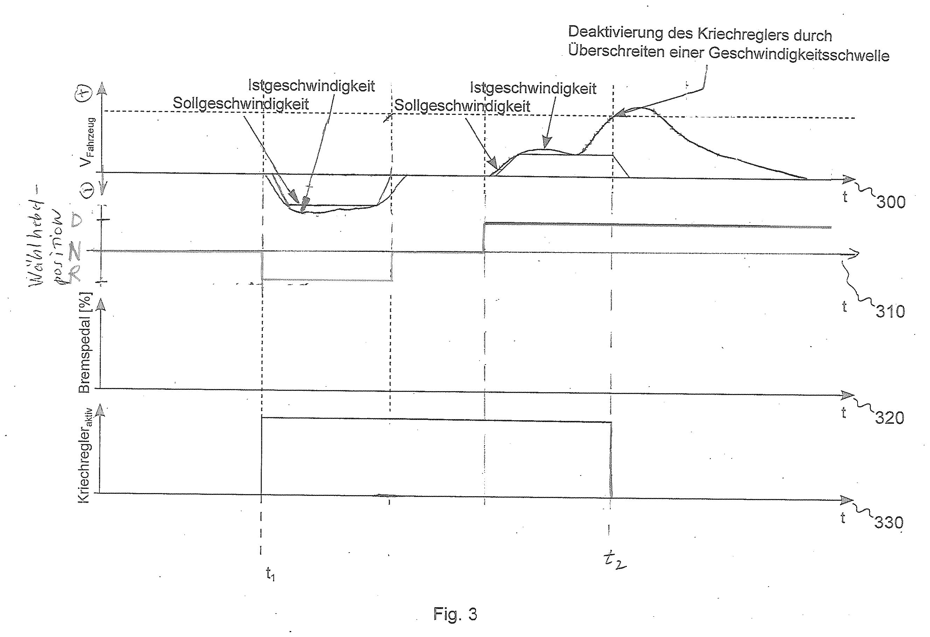

Um die Funktionsweise des Ausführungsbeispiels näher zu erläutern, zeigt die Fig. 3 beispielhafte Signalverläufe der einzelnen Signale in dem Ausführungsbeispiel. Die Fig. 3 illustriert 3 verschiedene Signalverläufe 300, 310, 320 und 330. Alle 4 Signalverläufe sind über der Zeit t angegeben. Der obere Signalverlauf 300 zeigt die Geschwindigkeit v_{Fahrzeug} des Fahrzeugs. Der Signalverlauf 310 zeigt die Position des Wählhebels. Der Signalverlauf 320 zeigt den Stellgrad des Bremspedals in Prozent. Der Signalverlauf 330 zeigt die Aktivierung des Kriechreglers 20. Anhand der Signalverläufe der Fig. 3 wird nunmehr erläutert, wie die Kriechfunktion oder der Kriechmodus über die Fahrpedalbetätigung aktiviert wird und im Anschluss über die Geschwindigkeitsschwelle wieder deaktiviert wird.

Zunächst zeigt der Signalverlauf 310, dass zu einem Zeitpunkt t₁ der Wählhebel in die Position "R" für die Rückwärtsfahrt von dem Fahrer gebracht wird, wodurch der Kriechregler 20 aktiviert wird. In Folge der Aktivierung, versucht der Kriechregler 20 ein Sollmoment auf die Räder des Fahrzeugs zu bringen, sodass eine Regelabweichung zwischen Sollgeschwindigkeit und Istgeschwindigkeit ausgeregelt wird, d.h. sodass die Sollgeschwindigkeit möglichst erreicht wird. Dies geschieht kurz danach mit einem leichten Überschwinger, wie die Geschwindigkeitskurve des Fahrzeugs im Signalverlauf 300 zeigt. Kurz darauf wird der Wählhebel zurück in die neutrale Position "N" und danach in die Vorwärtsfahrtposition "D" gebracht. Kurz darauf wird das Fahrpedal noch einmal stärker betätigt, was zu einer Überschreitung einer Geschwindigkeitsschwelle zum Zeitpunkt t₂ führt. Bei Überschreiten der Geschwindigkeitsschwelle wird der Kriechmodus des Kriechreglers 20 wieder deaktiviert, was im Signalverlauf 330 deutlich zu erkennen ist. Wenn nun im Folgenden die Geschwindigkeit des Fahrzeugs wieder fällt, und dies ist in dem Signalverlauf 300 zu sehen, sinkt die Geschwindigkeit des Fahrzeugs auch unter die Sollgeschwindigkeit ab, wobei der Kriechmodus deaktiviert bleibt. In anderen Worten kann nach dieser Überschreitung der Geschwindigkeitsschwelle das Fahrzeug ausrollen.

Würde sich das Fahrzeug an einem Gefälle vorwärts mit vorgewählter Rückwärtsfahrt durch Schwerkraft bewegen, und würde es zur Überschreitung der Geschwindigkeitsschwelle kommen, bleibt der Kriechmodus aktiviert, wobei auch die Möglichkeit besteht ihn in diesem Fall zu deaktivieren.

Die Geschwindigkeitsschwelle ist vorzugsweise als eine der Vorwärtsgeschwindigkeit eingestellt, wobei zur Deaktivierung des Kriechmodus auch eine Geschwindigkeitsschwelle für die Rückwärtsfahrt, die nicht unbedingt den gleichen absoluten Wert wie die für die Vorwärtsfahrt haben muss, möglich ist.

Wie der Signalverlauf 320 in der Fig. 3 zeigt, findet keine Änderung der Bremspedalstellung statt. In anderen Worten kann dieses Aktivieren der Kriechfunktion sowie das anschließende Deaktivieren der Kriechfunktion rein basierend auf der Fahrzeuggeschwindigkeit und der Position des Wählhebels geschehen.

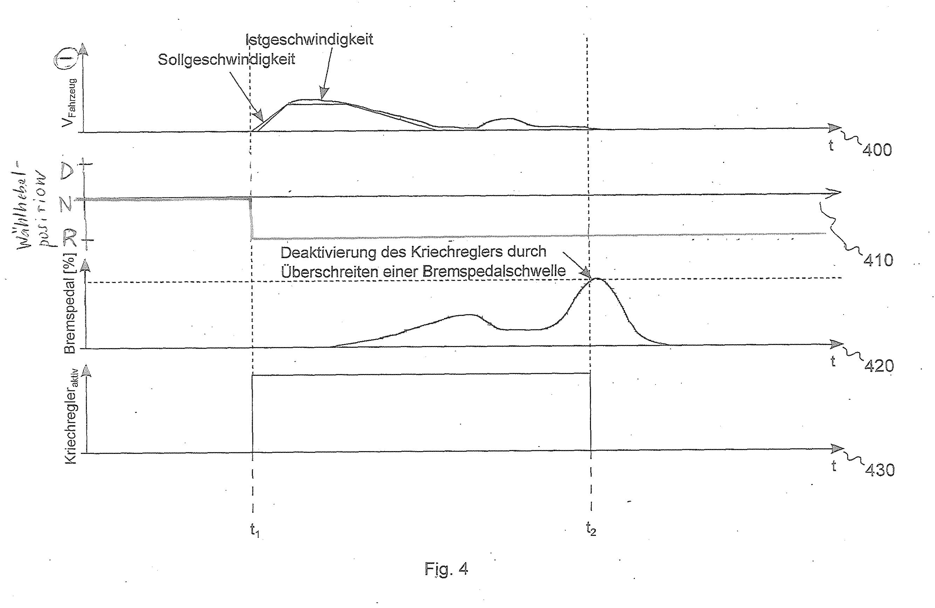

Die Fig. 4 zeigt ebenfalls vier beispielhafte Signalverläufe aus dem oben beschriebenen Ausführungsbeispiel. Die 4 Signalverläufe 400, 410, 420 und 430 sind ebenso wie in der Fig. 3 über der Zeit t aufgetragen. Es wird darauf hingewiesen, dass das Geschwindigkeitssignal 400 umgekehrt als der Signal 300 die Minuswerte in die Richtung nach oben zeigt. Die Signalverläufe der Fig. 4 illustrieren die Aktivierung des Kriechmodus durch Vorwählen der Rückwärtsfahrt und eine Deaktivierung über eine Bremspedalschwelle.

Die Fig. 4 zeigt Signalverläufe in dem Ausführungsbeispiel; wenn der Kriechmodus über die Fahrpedalbetätigung aktiviert wird und anschließend über das Bremspedal wieder deaktiviert wird. Der Signalverlauf 400 zeigt dabei wieder die Geschwindigkeit des Fahrzeugs. Der Signalverlauf 410 zeigt die Position des Wählhebels. Der Signalverlauf 420 zeigt dabei die Stellung des Bremspedals in Prozent und der Signalverlauf 430 zeigt die Aktivierung des Kriechmodus oder des Kriechreglers 20. Ähnlich wie bereits in der Fig. 3 beschrieben, lässt sich dem Signalverlauf 410 entnehmen, dass zum Zeitpunkt t₁ der Kriechregler 20 durch Vorwählen der Rückwärtsfahrt aktiviert wird. Dies ist dem Signalverlauf 430 zu entnehmen und spiegelt sich auch im Verlauf der Geschwindigkeit im Signalverlauf 400 wieder. Hier ist zu erkennen, dass nunmehr bei aktiviertem Kriechmodus der Kriechregler 20 versucht, die Fahrzeuggeschwindigkeit auf die Sollgeschwindigkeit einzuregeln. Wie dem Geschwindigkeitsverlauf zu entnehmen ist, ändert sich die Sollgeschwindigkeit in Abhängigkeit der Bremspedalstellung. In anderen Worten wird hier ein Rangiermanöver ausgeführt, wobei im Kriechmodus das Fahrzeug mehrfach gebremst wird, bis dann eine Bremspedalschwelle zum Zeitpunkt t₂ überschritten wird.

Dies lässt sich an der Korrelation der Verläufe aus der Fahrzeuggeschwindigkeit 400 und der Stellung des Bremspedals 420 erkennen. Nachdem die Bremspedalschwelle einmal überschritten wurde, Zeitpunkt t₂, wird, wie der Signalverlauf 430 zeigt, der Kriechregler 20 deaktiviert. Gleichzeitig ist dem Verlauf 400 zu entnehmen, dass damit die Sollgeschwindigkeit auf 0 herabsinkt, da der Kriechmodus nunmehr deaktiviert ist.

In einem weiteren Ausführungsbeispiel kann die Schaltung 10 einen Schalter zur Aktivierung oder Deaktivierung der Kriechfunktion aufweisen. In manchen Ausführungsbeispielen kann der Schalter in Software realisiert sein, z.B. als Softwareschalter in einem Menü oder Untermenü einer Softwareapplikation, die mit dem Steuergerät oder der Schaltung zusammenwirkt. Beispielsweise kann diese Software in einem Kombiinstrument oder in einem Radio oder Navigationsgerät implementiert sein. In anderen Ausführungsbeispielen ist auch ein Hardwareschalter oder -taster denkbar, der die Kriechfunktion insgesamt anwählbar macht. In weiteren Ausführungsbeispielen, insbesondere wenn ein Taster vorhanden ist, kann dieser auch mit den oben genannten Funktionen der Pedale zusammenwirken.

Beispielsweise kann die Kriechfunktion über den Taster aktiviert werden und gemäß der obigen Beschreibung wieder deaktiviert werden, z.B. durch Betätigen des Bremspedals oder durch Anheben des Fahrpedals. In analoger Weise ist auch eine umgekehrte Vorgehensweise denkbar, nämlich die Aktivierung gemäß der obigen Beschreibung, z.B. durch Vorwählen der Rückwärtsfahrt, und die Deaktivierung mittels des Tasters. Der Taster selbst kann ebenfalls beispielsweise durch einen Touchscreen und entsprechende Software realisiert sein. In manchen Ausführungsbeispielen kann der Taster z.B. bei geringen Geschwindigkeiten auf einem Display eines Touchscreens eingeblendet werden. In anderen Worten kann der Schalter in einem Steuergerät realisiert sein, dass per Hard- und/oder Software die Schaltung und damit den Kriechmodus aktivieren und/oder deaktivieren kann und das z.B. mit Bedienelementen, wie z.B. einem Touchscreen des Fahrzeugs entsprechend zusammenwirkt.

Ausführungsbeispiele haben den Vorteil, dass die Kriechfunktion nur bei Bedarf aktiviert werden kann. Die Kriechfunktion kann durch eine Interaktion des Fahrers deaktiviert und wieder aktiviert werden. Darüber hinaus bieten Ausführungsbeispiele den Vorteil, dass keine zusätzliche Bremseinrichtung zum Halten des Fahrzeugs im Stillstand benötigt wird, sofern der Kriechmodus dann deaktiviert ist. Weiterhin bieten Ausführungsbeispiele den Vorteil, dass gegenüber permanent kriechenden Fahrzeugen der Verbrauch und auch der Verschleiß der beteiligten Komponenten reduziert werden kann.

Ein weiteres Ausführungsbeispiel umfasst ein Fahrzeug mit der oben beschriebenen Schaltung 10. Das Fahrzeug umfasst zumindest eine elektrische Antriebskomponente, eine gesteuerte Kupplung oder ein Automatikgetriebe, sodass ein entsprechender Kriechmodus ermöglicht wird, bzw. an- und abschaltbar ermöglicht wird.

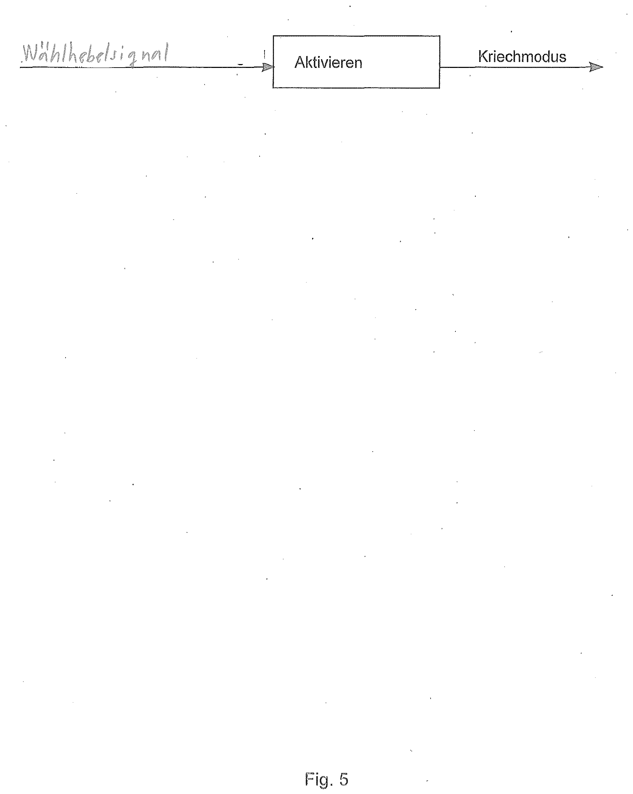

Die Fig. 5 zeigt ein Blockschaltbild eines Verfahrens zur Steuerung eines Kriechmodus in einem Fahrzeug. Das Verfahren umfasst einen Schritt des Aktivierens des Kriechmodus durch Vorwählen der Rückwärtsfahrt.

Die in der vorstehenden Beschreibung, den nachfolgenden Ansprüchen und den beigefügten Figuren offenbarten Merkmalen können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hineinschreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Schaltung (10) zur Steuerung eines Kriechmodus in einem Fahrzeug, wobei der Kriechmodus durch Vorwählen einer Rückfahrtrichtung aktivierbar ist, wobei die Schaltung ausgebildet ist, um das Wählhebelsignal von einem Wählhebel des Fahrzeugs zu empfangen und ein Fortbewegungssignal für das Fahrzeug bereitzustellen und wobei der Kriechmodus beim Wechsel des Wählhebels von der Position (R) für die Rückwärtsfahrt über die neutrale Position (N) in die Position (D) für die Vorwärtsfahrt aktiviert bleibt.

2. Schaltung (10) nach einem der vorangehenden Ansprüche, wobei das Fortbewegungssignal den Kriechmodus signalisiert, wobei sich das Fahrzeug in dem Kriechmodus aus dem Stand fortbewegt ohne dass das Fahrpedal betätigt wird und die Fortbewegung im Kriechmodus des Fahrzeugs über das Bremspedal kontrollierbar ist.

3. Schaltung (10) gemäß einem der vorangehenden Ansprüche, wobei die Schaltung ausgebildet ist, um den Kriechmodus nach einem Start des Fahrzeugs zu deaktivieren.

4. Schaltung (10) gemäß einem der vorangehenden Ansprüche, wobei der Kriechmodus durch Überschreiten einer vordefinierten Mindestgeschwindigkeit deaktivierbar ist.

5. Schaltung (10) gemäß dem Anspruch 4, wobei die Mindestgeschwindigkeit eine Vorwärtsgeschwindigkeit ist, die bei gewählter Vorwärtsfahrt erreicht werden muss.

6. Schaltung (10) gemäß einem der vorangehenden Ansprüche, die ferner ausgebildet ist, um bei aktiviertem Kriechmodus ein Fortbewegungssignal derart bereitzustellen, dass ein Antriebsmoment für das Fahrzeug erzeugt wird, solange eine vorgegebene Sollgeschwindigkeit nicht erreicht ist.

7. Fahrzeug mit einer Schaltung (10) gemäß einem der vorangehenden Ansprüche.

8. Fahrzeug gemäß dem vorangehenden Anspruch, das zumindest eine elektrische Antriebskomponente, eine gesteuerte Kupplung oder ein Automatikgetriebe aufweist.

9. Verfahren zur Steuerung eines Kriechmodus in einem Fahrzeug, mit Aktivieren des Kriechmodus durch Vorwählen einer Rückfahrtrichtung, wobei das Wählhebelsignal von einem Wählhebel des Fahrzeugs empfangen wird und ein Fortbewegungssignal für das Fahrzeug bereitgestellt werden kann, wobei der Kriechmodus beim Wechsel des Wählhebels von der Position (R) für die Rückwärtsfahrt über die neutrale Position (N) in die Position (D) für die Vorwärtsfahrt aktiviert bleibt.

10. Programm mit einem Programmcode zum Durchführen des Verfahrens gemäß Anspruch 9, wenn der Programmcode auf einem Computer, einem Prozessor oder einer programmierbaren Hardwarekomponente ausgeführt wird.

## Claims

1. Circuit (10) for controlling a creep mode in a vehicle, wherein the creep mode may be activated by selecting a reverse direction, wherein the circuit is designed to receive the selector lever signal from a selector lever of the vehicle and to provide a movement signal for the vehicle, and wherein the creep mode remains active when moving the selector lever from the reverse position (R) through the neutral position (N) to the drive position (D).

2. Circuit (10) according to the preceding claims, wherein the movement signal signals the creep mode, and wherein the vehicle moves in the creep mode from a standing position without the accelerator pedal being actuated, and the movement in the creep mode of the vehicle is controllable via the brake pedal.

3. Circuit (10) according to the preceding claims, wherein the circuit is designed to deactivate the creep mode after a the vehicle starts.

4. Circuit (10) according to one of the preceding claims, wherein the creep mode may be deactivated by exceeding a predefined minimum speed.

5. Circuit (10) according to claim 4, wherein the minimum speed is a forward speed, which must be achieved with drive 6 selected.

6. Circuit (10) according to one of the preceding claims, further designed to provide a movement signal when the creep mode is activated, so that a drive torque is generated for the vehicle as long as a predetermined target speed is not reached.

7. Vehicle with a circuit (10) according to one of the preceding claims.

8. Vehicle according to the preceding claim, comprising at least one electric drive component, a manually-controlled clutch, or an automatic transmission.

9. Method of controlling the creep mode in a vehicle, comprising activation of the creep mode by selecting reverse, wherein the selector lever signal is received from a selector lever of the vehicle and a drive signal for the vehicle may be provided, wherein the creep mode remains activated during changing the selector lever from the reverse position (R) through the neutral position (N) to the drive position (D).

10. Program comprising program code for implementing the method according to claim 9 when the program code is executed on a computer, a processor or a programmable hardware component.

## Revendications

1. Circuit (10) destiné à la commande d'un mode de vitesse extra lente dans un véhicule, le mode de vitesse extra lente étant pouvant être activé par la présélection d'une direction de marche inverse, le circuit étant constitué pour recevoir le signal de levier sélecteur en provenance d'un levier sélecteur du véhicule et pour fournir un signal de déplacement pour le véhicule, et le mode de vitesse extra lente demeurant activé lors du passage du levier sélecteur de la position (R) pour la marche arrière vers la position (D) pour la marche avant en passant par la position neutre (N).

2. Circuit (10) selon l'une des revendications précédentes, le signal de déplacement signalant le mode de vitesse extra lente, le véhicule dans le mode de vitesse extra lente se déplaçant à partir de l'arrêt sans que la pédale d'accélérateur soit actionnée, et le déplacement dans le mode de vitesse extra lente du véhicule pouvant être contrôlé par le biais de la pédale de frein.

3. Circuit (10) selon l'une des revendications précédentes, le circuit étant constitué pour désactiver le mode de vitesse extra lente après un démarrage du véhicule.

4. Circuit (10) selon l'une des revendications précédentes, le mode de vitesse extra lente pouvant être désactivé par le dépassement d'une vitesse minimale prédéfinie.

5. Circuit (10) selon la revendication 4, la vitesse minimale étant une vitesse vers l'avant qui doit être atteinte pour la marche avant choisie.

6. Circuit (10) selon l'une des revendications précédentes, qui est en outre constitué pour, quand le mode de vitesse extra lente est activé, fournir un signal déplacement de telle sorte qu'un couple d'entraînement pour le véhicule est fourni tant qu'une vitesse de consigne prescrite n'est pas atteinte.

7. Véhicule avec un circuit (10) selon l'une des revendications précédentes.

8. Véhicule selon la revendication précédente, qui présente au moins un composant d'entraînement électrique, un embrayage commandé ou une boîte de vitesse automatique.

9. Procédé destiné à la commande d'un mode de vitesse extra lente dans un véhicule, avec activation du mode de vitesse extra lente par la présélection d'une direction de marche inverse, le signal de levier sélecteur en provenance d'un levier de sélecteur du véhicule étant reçu, et un signal de déplacement pour le véhicule étant fourni, le mode de vitesse extra lente demeurant activé lors du passage du levier sélecteur de la position (R) pour la marche arrière vers la position (D) pour la marche avant en passant par la position neutre (N).

10. Programme avec un code de programme pour la réalisation du procédé selon la revendication 9 quand le code de programme est exécuté sur un ordinateur, un processeur ou un composant matériel programmable.
